Europäisches Patentamt

European Patent Office

Office européen des brevets

(19)

(11) Veröffentlichungsnummer: **0 158 270**
**A2**

(12) **EUROPÄISCHE PATENTANMELDUNG**

(21) Anmeldenummer: 85103997.4

(22) Anmeldetag: 02.04.85

(51) Int. Cl.⁴: **H 04 M 1/00**
**H 04 M 3/50**

(30) Priorität: 09.04.84 US 597985

(43) Veröffentlichungstag der Anmeldung:
16.10.85 Patentblatt 85/42

(84) Benannte Vertragsstaaten:
AT CH DE FR GB LI

(71) Anmelder: Siemens Aktiengesellschaft
Berlin und München Wittelsbacherplatz 2
D-8000 München 2(DE)

(72) Erfinder: Schwab, Bernard H.
61 Westcott Road
Princeton, NJ 08540(US)

(54) Rundfunksystem zum Speichern und späteren Abrufen gesprochener Information.

(57) Es wird ein System mit Einrichtungen zum Senden, Speichern und späteren Aufrufen gesprochener Information vorgeschlagen. Dieses System besteht aus einer ersten, sendenden Einrichtung und einer oder mehreren fernen, empfangenden Einrichtungen. Bei der ersten Einrichtung wird ein Textdatenstrom, der aus einer Vielzahl von Wörtern besteht, in Phoneme umgesetzt. Diese Phoneme werden an die entfernten Einrichtungen (32, 28, 34, 36) gesendet, wo sie in analoge Sprachsignale mittels eines Sprachgenerators (28) umgesetzt werden und dann durch einen Lautsprecher (36) oder einen Kopfhörer in Sprachschall gewandelt werden.

EP 0 158 270 A2

FIG 2

SIEMENS AKTIENGESELLSCHAFT          Unser Zeichen

Berlin und München                  VPA 84 P 7417 E

Rundfunksystem zum Speichern und späteren Abrufen gesprochener Information.

Die vorliegende Erfindung bezieht sich auf ein Rundfunksystem zum Speichern und späteren Abrufen gesprochener
Information.

Es ist bekannt, daß gesprochene Information, wie Nachrichten, Sportreportagen, Wetterberichte, Theaterprogramme und
dergl., von einer einzigen Rundfunkstation zu einer Vielzahl
von Rundfunkempfängern übertragen wird. Eine typische Rundfunkstation sendet diese Arten von Information (z.B. internationale Nachrichten) aus, von denen in der Sendestation
angenommen wird, daß der Hörer diese in regelmäßigen Zeitabständen (z.B. 1 Stunde) zu hören wünscht. Dieses System hat
jedoch zwei Hauptnachteile:

1.  Der Hörer, der die Rundfunkstation zu einem beliebigen
    Zeitpunkt einstellt, muß warten, bis die nächste, im
    Programm vorgesehene Sendung für die Information, die er
    zu hören wünscht, ausgestrahlt wird;

2.  und der Hörer muß einer beträchtlichen Informationsmenge
    folgen, die für ihn nicht von Interesse ist.

Wenn der Hörer beispielsweise an internationalen Nachrichten,
nicht jedoch an Lokalnachrichten, Sportberichten, Wetterberichten oder anderer Information interessiert ist, muß er
normalerweise der Rundfunksendung folgen, dieser zuhören und
unerwünschte Information ignorieren, bis die gewünschte Information gesendet wird. Danach muß er, falls er wünscht,

Pap 1 Bla / 24.1.1985 in periodischen Abständen die jeweils ergänzenden Meldungen zu der ihn interessierenden Information zu empfangen, den Ablauf der betreffenden Zwischenzeit abwarten, um die gewünschte Information zu empfangen.

Außerdem ist notwendigerweise, da eine Rundfunkstation versucht, alle Arten von Information, die von Interesse für die Hörer sein könnten, zu übertragen, jeder spezielle Informationsteil sehr kurz (meistens nicht mehr als 1 bis 2 Minuten). Daher ist die Information unvollständig, und es fehlen die interessierenden Einzelheiten.

Es ist ein anderes Informationsübertragungssystem bekannt, das die zuvor beschriebenen Nachteile ausschließt. Dieses System ist das bekannte Computer-Informationsspeicher/Wiedergabesystem, das vielen Benutzern gestattet, die gewünschte Information von einer zentralen Datenquelle zu erhalten.

Typischerweise besteht ein derartiges System aus einem zentralen Computer, der große Mengen von Textdaten speichern und auf diese zugreifen kann. Ein Benutzer dieses Systems verwendet ein Datenendgerät, das mit dem zentralen Computer über eine Fernsprechleitung oder irgendeine andere Art von Übertragungskanal verbunden ist, um den vom Benutzer gewünschten Typ von Information empfangen zu können. Der zentrale Computer sucht dann seine bestehenden Datenspeicherinhalte nach der Information, die gewünscht wird, ab und überträgt diese Daten, z.B. Textdaten, zu dem Endgerät des Benutzers, auf das die Anfrage zurückgeht. Der Benutzer kann dann entweder diese Textdaten auf einem Bildschirm betrachten, oder er kann veranlassen, daß sie für Zwecke des Nachlesens auf Papier gedruckt werden.

Das Datenterminal des Benutzers kann ein sogenanntes "stummes" Terminal sein, das Text nur aufnimmt, speichert und anzeigt, der zu einem zentralen Computer gesendet oder von
diesem empfangen werden soll. Alternativ dazu kann das
Datenterminal indessen auch ein "intelligentes" Terminal
sein, das im wesentlichen in sich einen kleinen Rechner
aufweist, der programmiert werden kann, um Information, die
durch den Benutzer eingegeben wird oder von dem zentralen
Computer empfangen wird, zu verarbeiten.

Computer-Informations-Speicher- und -Wiedergewinnungssysteme
der Art, die zuvor beschrieben wurden, können durch Verwendung eines Sprachgenerators (Sprachsynthesizer) aufgewertet
werden, um Sprachsignale zu erzeugen, die ausgegeben werden
können. Abgesehen von der Tatsache, daß derartige Sprachgeneratoren sehr kostspielig sind, kann die Verwendung eines
solchen Sprachgenerators zusammen mit einem Datenterminal
die Schaffung eines "Rundfunk"-Systems ermöglichen, das die
zuvor erwähnten Nachteile, die den klassischen Rundfunksystemen anhaften, ausschließt.

Sprachgeneratoren für Textdaten sind bereits bekanntgeworden und werden seit einiger Zeit benutzt. Die Theorie der
Wirkungsweise solcher Sprachgeneratoren ist in dem Artikel
"Synthetic Voices for Computers" von J.I. Flanagan et al,
IEEE Spectrum, Oct.1970 beschrieben. In jüngster Vergangenheit sind nunmehr bereits auf dem Markt erhältliche Schaltkreise zum Erzeugen analoger Sprachausgangssignale für einen
Kopfhörer oder Lautsprecher entwickelt worden. Ein derartiger integrierter Schaltkreis ist der VOTRAX SC-01A-Sprach-Syn-
thesizer, lieferbar von der Fa. Votrax Corp., 500 Stephenson
Highway, Troy, Michigan 48084. Der Baustein SC-01A ist ein
integrierter Schaltkreis des 22-pin-Typs, der aus einem digitalen Code-Umsetzer und einem elektronischen Modell für den
menschlichen Vokaltrakt besteht. Der digitale Code-Umsetzer

**0158270**

setzt einen 6-Bit-Phonem-Code und einen 2-Bit-Tonhöhen-Code in eine Matrix aus spektralen Parametern um, die das Vokaltrakt-Modell in synthetisierte Sprache umsetzen. Um diesen Chip SC-01A zu betreiben, ist ein Sprachumsetzer erforderlich, der einen Textdatenstrom, welcher durch ASCII (American Standard Code for Information Interchange)-Zeichencodes repräsentiert wird, in die speziellen Phonem-Codes und Tonhöhen-Codes umsetzt.

Im folgenden werden sowohl die Phonem-Codes als auch die Tonhöhen-Codes mit den Sammelbegriffen "Phonem-Codes" oder "Phoneme" bezeichnet. Zum Verständnis des Erfindungsgegenstandes sollte der Ausdruck "Phonem" so verstanden werden, daß er ein 8-Bit-Byte oder -Code ist, der derart ausgelegt ist, daß er eine integrierte Schaltung als Sprach-Generator steuern kann, um einen speziellen Klang der menschlichen Stimme zu erzeugen. Jedes Wort der synthetisierten Sprache muß dabei auf diese Weise durch eines oder mehrere Phoneme repräsentiert sein.

Der Artikel "Build the Microvox Text to Speech Synthesizer" von Stephen A. Ciarcia, Byte Magazine, Sept.1982, S.64-88 und Okt.1982, S.40-64 offenbart eine intelligente periphere Einrichtung für ein Datenterminal oder einen Computer, der einen einfachen englischen, gesprochenen Text in Phoneme umsetzt. Wie dies bei allen Sprach-Umsetzern erforderlich ist, muß diese Einrichtung einen praktischen Kompromiß zwischen einem digitalen Großrechner, der in der Lage ist, Phoneme für ein großes Vokabular von Wörtern zu erzeugen, was zu einer extrem klangtreu wirkenden Sprache führt, und einer kostengünstigen, einfachen Einheit schließen, die sich auf ein begrenztes Vokabular beschränkt und Phoneme erzeugt, die zu einer verständlichen Sprache mit allerdings verringerter Qualität führt.

Die Schwierigkeit jedes Sprach-Umsetzungsversuches ist weitgehend von der Größe des erforderlichen Vokabulars abhängig. Für kleine Vokabularien kann eine Listen-Absuchprozedur benutzt werden, um Wörter in mit ihnen korrespondierende Phoneme umzusetzen. Für große Vokabularien wird diese
Listen-Absuchprozedur indessen in beschränkender Weise unhandlich, und es muß ein generalisierter Text-zu-Sprache-
Umsetzungsalgorithmus verwendet werden, um die Phoneme zu
erzeugen.

Ein typischer Text-zu-Sprache-Umsetzungsalgorithmus ist so
ausgelegt, daß er ASCII-Zeichen als Eingangssignal annimmt
und eine "Synthese-nach-Vorschrift-Analyse" der Zeichenreihen durchführt. Der Algorithmus interpretiert auf diese
Weise die Zeichenfolge als Wörter oder Teile von Wörtern und
bestimmt ein Schema für die Aussprache dieser Folgen entsprechend einem festgelegten Satz von Regeln. Diese Regeln bestimmen, welche Zeichen stimmhaft zu machen sind und welche
nicht. Für diejenigen Zeichen, die stimmhaft zu machen
sind, bestimmen die Regeln, wie gegebene Kombinationen von
Zeichen am häufigsten auszusprechen sind, so daß ein geeignetes Phonem erzeugt werden kann.

Text-zu-Sprache-Umsetzungsprogramme variieren in ihrer Länge
abhängig von der Größe des Vokabulars und dem Grad der Genauigkeit, die bei der Aussprache gefordert wird. Typische
Programme dieser Art benötigen 4 K bis 8 K Bytes für den Zeichencode in den meisten bekannten Prozessoren, einige komfortablere Programme benötigen dagegen bis zu 80 K Bytes.
Oftmals besteht die Hälfte einer 80 K Byte-"Synthese-nach-
Regel-Routine" aus Tabellen von Wörtern, die Ausnahmen von
den Regeln darstellen.

Zusammenfassend ist daher festzustellen, daß die derzeitige
Technologie die Ausgabe von synthetisierter Sprache aus einem Datenterminal gestattet. Indessen muß ein verhältnismäßig teurer Sprach-Umsetzer vorgesehen werden, um ein
verhältnismäßig großes Vokabular von Wörtern in Phoneme
für einen integrierten Schaltkreis, der als Sprachgenerator arbeitet, umzusetzen.

Der vorliegenden Erfindung liegt die Aufgabe zugrunde, ein
System für das Rundfunkwesen zu schaffen, das gesprochene
Information speichert und später wahlweise aufruft. Aufgabengemäß soll durch die Erfindung ein System der obengenannten Art geschaffen werden, das verhältnismäßig kostengünstige Speicher-Auswahl- und -Aufrufeinrichtungen verwendet.

Die der Erfindung zugrundeliegende Aufgabe wird durch die
in dem Patentanspruch 1 angegebenen Merkmale gelöst.

Die genannten Aufgaben sowie weitere Aufgaben werden aus der
im folgenden gegebenen Beschreibung ersichtlich, die sich
auf die Übertragung von Phonemen anstelle von alphanumerischen Zeichen für Textdaten und auf die Bereitstellung eines
Sprachgenerators bei jeder Empfangsstation, der diese Phoneme in ein analoges Sprachsignal umsetzt, bezieht.

Im einzelnen enthält die Einrichtung gemäß der vorliegenden Erfindung eine Datenquelle an einem ersten Ort zum Erzeugen eines Datenstromes für Textdaten, der eine Vielzahl
von Wörtern enthält, einen Sprachumsetzer, der an diesem
ersten Ort angeordnet ist, zum Umsetzen der Wörter in Phoneme, einen Übertragungskanal zum Übertragen der Phoneme
zu einem fernen Ort, einen Sprachgenerator an dem fernen
Ort zum Umsetzen der Phoneme, die über den Übertragungskanal empfangen worden sind, in analoge Sprachsignale, und
einen Signalwandler, beispielsweise einen Kopfhörer oder Lautsprecher, zum Umsetzen der analogen Sprachsignale in
akustische Signale.

Vorteilhafterweise ist an dem entfernten Ort außerdem ein
Pufferspeicher zum Steuern der Rate vorgesehen, bei der die
Phoneme dem Sprachgenerator zugeführt werden.

Erfindungsgemäß ist daher ein einziger Sprach-Umsetzer auf
der Seite der Datenquelle und vor dem Übertragungskanal in
der Übertragungsstrecke angeordnet, um Wörter in Phoneme
umzusetzen. Mit einem derartigen System kann der Sprach-
Umsetzer mit einem verhältnismäßig langen und komfortablen
Text-zu-Sprache-Umsetzprogramm arbeiten, so daß er ein großes Vokabular von Wörtern bearbeiten kann. Die sich ergebende Aussprache dieser Wörter ist praktisch genau.

Gemäß einem besonderen, vorteilhaften Merkmal der vorliegenden Erfindung ist an dem fernen Ort ein kleiner Computer zum
Speichern der Phoneme, die von dem Übertragungskanal empfangen werden, zum späteren Selektieren und Wiedergewinnen bestimmter Blöcke dieser Phoneme und zum Liefern dieser Phoneme an den Sprachgenerator vorgesehen. Auf diese Weise ist
es für einen Hörer an dem fernen Ort möglich, die Art von
Information auszuwählen, die er aus einer Anzahl von Arten
von Information, die in dem Rechnerspeicher gespeichert sind,
zu hören wünscht.

Mit einer derartigen Informations-Speicherungs- und -Wiedergewinnungseinheit an dem fernen, empfangenden Ort ist es möglich, ein Rundfunksystem folgender Art zu schaffen:

Es sei angenommen, daß ein Rundfunk- oder Drahtfunksystem
eine Sendestation mit einem zentralen Computer aufweist.
Diese Organisation kann Zugriff zu einem Hauptnachrichtendienst oder zu großen Tageszeitungen haben. Text-Editoren
bei der Rundfunkstation schreiben Texte als Kopie für die
wichtigsten Neuigkeiten des Tages. Diese Neuigkeiten werden jeweils in eine aus einer Anzahl von Neuigkeitskategorien eingeordnet, beispielsweise Allgemeine Nachrichten,
Geschäftsnachrichten, Sportmeldungen, Wetterberichte usw..
Jede dieser Neuigkeitskategorien kann außerdem in Subkategorien unterteilt sein. Beispielsweise können die Allgemeinen
Nachrichten in Internationale Nachrichten, Lokalnachrichten,
Nachrichten aus der Bundeshauptstadt und dergl. unterteilt
sein. Die Editoren geben dann den entsprechenden Text in
den zentralen Computer mit einer geeigneten "Kopfinformation", die die Nachrichtenkategorie, die Länge des Nachrichtentextes (Anzahl der Zeichen) und möglicherweise weitere
Information, wie Schlüsselwörter innerhalb der Nachricht,
eingeben. Der Computer setzt danach den Text (mit Ausnahme
der Kopfinformation) in die richtigen Phoneme, die für den
Sprachgenerator benötigt werden, der bei den Empfängern benutzt wird, um. Falls gewünscht, können die Editoren die
Übersetzung oder Umsetzung selbst durch Abhören eines Sprach-
Signalausganges über einen Sprachgenerator bei der Rundfunkstation abhören.

Es ist selbstverständlich nicht notwendig, daß nur Nachrichten verarbeitet und durch das System ausgesendet werden. Es
kann irgendeine gesprochene Information, z.B. Anweisungen
für Autofahrer, auf ähnliche Weise behandelt werden.

Die in Sprache übersetzte Information wird dann in geeigneter Weise zu der Rundfunkteilnehmern übertragen. Es bestehen zahlreiche unterschiedliche Verfahren der Rundfunkübertragung. Die einfachste und möglicherweise die am wenigsten
kostspielige Weise besteht darin, die Information über Drahtverbindungen, beispielsweise Fernsprechleitungen, zu senden.

Wenn eine große Anzahl von Teilnehmern zu bedienen ist, kann
es kostengünstiger sein, die drahtlose Sendetechnik zu benutzen.

Die Information, die in Form von Binärdaten ausgesendet
wird, wird automatisch in dem Speicher des kleinen Computers
bei jeder Empfangsstation gespeichert. Die empfangene Information liegt in Form von Datenblöcken vor, wobei jeder Block
mit einer Kopfinformation, beispielsweise in ASCII-Zeichen,
beginnt, dem eine Folge von Phonem-Information folgt, die
von dem Sprachgenerator verwendet werden, um analoge Sprachsignale zu erzeugen. Der Speicher kann einen Index aufweisen, der die Startadresse jedes individuellen Datenblocks
(Nachrichtenmeldung), einhergehend mit dessen betreffender
Kategorie (Allgemeine Nachrichten, Geschäftsnachrichten,
Sportmeldungen, Wetterberichte usw.), anzeigt. Der Computer
kann auf diese Weise leicht den Index in Abhängigkeit von
einer Anforderung durch den Benutzer abtasten.

Ein Benutzer-Bedienungsfeld bei der Empfangsstation kann
eine kleine Tastatur zum Auswählen einer Nachrichten-Kategorie sowie auch "Rücklauf"- und "Vorlauf"-Steuermittel aufweisen, die ein wiederholtes Hören eines Nachrichtenabschnittes
oder einer Nachricht als auch ein Überspringen einer nicht
interessierenden Nachricht gestatten.

Der Sprachgenerator empfängt die Phoneme für jede Nachricht,
die sequentiell in dem Computerspeicher gespeichert wurden,
und setzt diese Phoneme in Sprache um. Ein integrierter Schaltkreis des Typs VOTRAX SC-01A empfängt Daten bei einer Rate von
ungefähr 150 bit/s, um die Sprache zu erzeugen. Daher würde
eine 10 min-Nachricht etwa 90 000 Bits Information (Phoneme),
die in dem Speicher gespeichert sind, erfordern.

Die Meldungen oder Nachrichten, die in dem Computerspeicher des Empfängers gespeichert sind, können häufig auf den neuesten Stand gebracht werden. Neue Nachrichten können in freien Speicherplätzen gespeichert werden, und ältere Nachrichten in dem Speicher können routinemäßig nach einem vorbestimmten Zeitintervall gelöscht werden.

Entsprechend einem weiteren besonderen, vorteilhaften Merkmal der vorliegenden Erfindung kann die Kopfinformation, die jedem Text-Datenblock zugeordnet ist, die Adresse jeder fernen, empfangenden Station, zu der die Textdaten gesendet werden, enthalten. Auf diese Weise kann mittels des kleinen Computers jeder empfangenden Station die Adresse, die in der Kopfinformation enthalten ist, mit dessen eigener Adresse verglichen werden, und es müssen dann nur diejenigen Phoneme von Textdaten gespeichert werden, die für diese bestimmte Station vorgesehen sind.

Die Möglichkeit, jeweils nur eine oder eine Vielzahl von gegebenen Empfangsstationen adressieren zu können, hat eine Anzahl von Vorteilen. Beispielsweise können Fahrdienstleiter von Fuhrunternehmen Weghinweise, Fahrtrouten oder andere Information zu einem speziellen Fahrzeug (beispielsweise Lastwagen) des Fuhrparks aussenden. Im Falle von Rundfunkinformationsdiensten kann die Rundfunkgesellschaft wünschen, unterschiedliche Gebühren für unterschiedliche Nachrichten zu berechnen, und jeder Teilnehmer kann daher auf den Empfang der Art von Nachrichten beschränkt werden, die an seine Station adressiert ist. Schließlich kann Information selektiv an Teilnehmer adressiert werden, die ihre Teilnehmergebühren bezahlt haben.

Zum vollen Verständnis der vorliegenden Erfindung wird nun eine ins einzelne gehende Beschreibung anhand mehrerer, bevorzugte Ausführungsbeispiele für die Erfindung betreffen-

der Figuren beschrieben.

Fig.1    zeigt ein Blockschaltbild eines bekannten Informa-
         tionsverarbeitungssystems, das einen Sprachgenera-
         tor (Sprachsynthesizer) und einen Sprachsignalaus-
         gang aufweist.

Fig.2    zeigt ein Informationsverarbeitungssystem gemäß der
         vorliegenden Erfindung mit einer Vielzahl von Sprach-
         generatoren und entsprechenden Sprachsignalausgän-
         gen.

Fig.3    zeigt ein Blockschaltbild einer Sendestationseinrichtung in einem System gemäß der vorliegenden Erfindung.

Fig.4    zeigt ein Flußdiagramm des Programmes, das durch
         den Computer in dem Gerät gemäß Fig.3 benutzt·wird.

Fig.5    zeigt eine schematische Darstellung der Information,
         die durch das Gerät gemäß Fig.3 übertragen wird.

Fig.6    zeigt ein Blockschaltbild einer Empfangsstation in
         einem System gemäß der vorliegenden Erfindung.

Fig.7    zeigt ein Flußdiagramm des Programmes, das durch den
         Mikroprozessor der Einrichtung gemäß Fig.6 benutzt
         wird.

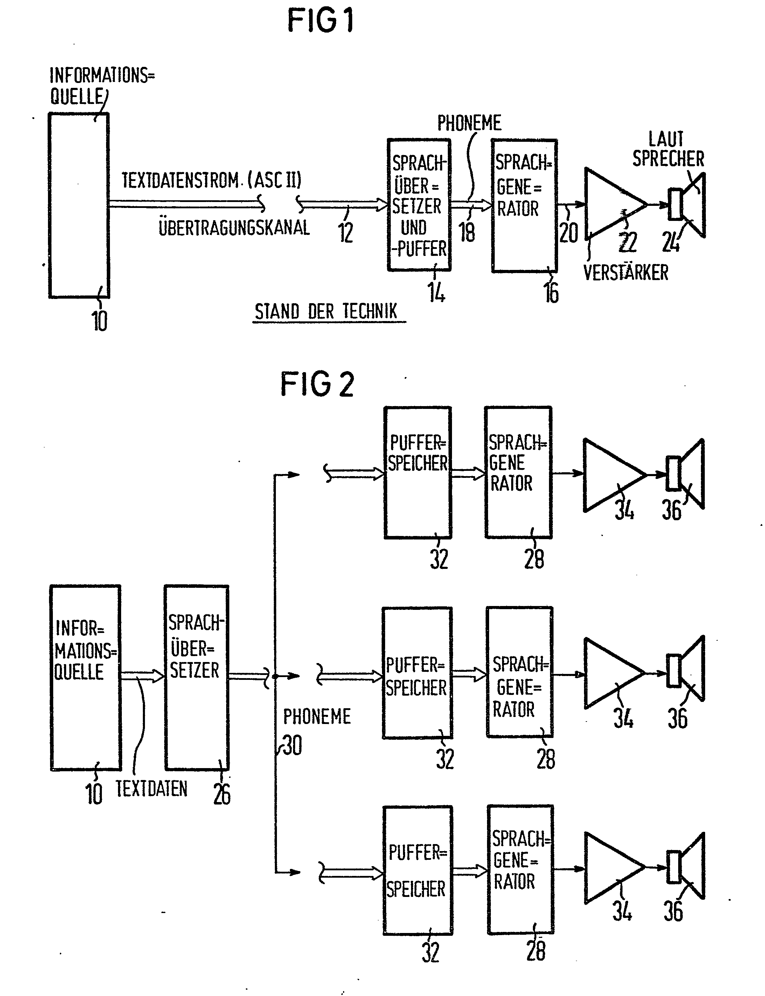

Die bevorzugten Ausführungsbeispiele für die vorliegende Erfindung werden nun anhand der Figuren 1 bis 7 beschrieben.
Identische Elemente in den verschiedenen Figuren sind mit
gleichen Bezugszeichen versehen.

Fig.1 zeigt ein typisches Informationsverarbeitungssystem, das einen Sprachgenerator mit einem Sprachausgang benutzt.
Dieses System besteht aus einer Informationsquelle 10, beispielsweise einem Computer oder einem Datenterminal, der
oder das einen Datenstrom für alphanumerische Zeichen (jeweils durch ein 8-bit-Byte entsprechend dem ASCII-Code definiert), die zu Wörtern, Sätzen und Absätzen eines Textes zusammengesetzt sind, erzeugt. Diese Textdaten werden
über einen Übertragungskanal 12 entweder in serieller oder
in paralleler Form zu je 8 Bits zu einem Sprach-Übersetzer
und -Puffer 14 übertragen. Der Sprach-Übersetzer setzt die
nach ASCII codierten Zeichen in 8-bit-Phoneme zur Benutzung
durch einen Sprachgenerator (Sprachsynthesizer) 16 um. Der
Sprach-Übersetzer kann in einer Weise aufgebaut sein, wie
dies in dem Artikel "Build the Microvox Text to Speech Synthesizer" von S.Ciarcia, auf den zuvor Bezug genommen wurde,
beschrieben ist, und der Sprachgenerator kann aus dem Schaltkreis des Typs VOTRAX SC-01A bestehen. Der Sprachgenerator
empfängt die Phoneme auf einem 8-bit-Paralleldatenbus 18 und
erzeugt ein analoges Ausgangssignal auf einer Leitung 20,
das durch einen Verstärker 22 verstärkt und dazu benutzt wird,
den Lautsprecher 24 zu treiben.

Die 8-bit-Phoneme, die auf dem 8-bit-Paralleldatenbus 18 auftreten, bestehen aus einem 6-bit-Modulationscode und einem
2-bit-Tonhöhencode. Die vier verfügbaren Tonhöhencodes gestatten eine breite Änderungsmöglichkeit der Tonhöhe, so daß
der Sprachgenerator so betrieben werden kann, daß er mit mehr
als nur einer Stimme "spricht". Die 64 Modulationscodes, die
durch die sechs Codebits ermöglicht werden, erzeugen 64 genau definierte Sprach-Klangfarben in dem Baustein SC 01A.
Jedes gesprochene Wort kann durch Aneinanderlagerung einer
Anzahl derartiger Sprachklänge gebildet werden.

Folglich dient der Sprach-Übersetzer 14 dazu, einen Satz von 8-bit-Bytes, der ein Wort durch ASCII-codierte alphanumerische Zeichen definiert, in einen anderen Satz von 8-bit-
Bytes, der das betreffende Wort durch Phoneme gekennzeichnet definiert, umzusetzen. Die Anzahl von Phonemen für ein
gegebenes Wort ist nicht von der Anzahl der alphanumerischen
Zeichen in diesem Wort abhängig.

Fig.2 zeigt ein System gemäß der vorliegenden Erfindung,
durch das Phoneme aus Textdaten an einem zentralen Ort erzeugt werden und dann zu einer Vielzahl von Sprachgeneratoren ausgesendet werden.

Das System gemäß Fig.2 enthält eine Informationsquelle 10,
die Textdaten in Form von ASCII-Zeichen an einen Sprach-
Übersetzer 26 abgibt. Der Sprach-Übersetzer setzt die Textdaten in 8-bit-Phonem-Codes um, und diese Codes werden entweder drahtlos oder über Draht zu Sprachgeneratoren an fernen Orten übertragen. Fig.2 zeigt als Beispiel drei Sprachgeneratoren 28, die die Phoneme aus einem Übertragungskanal
30 über entsprechende Pufferspeicher 32 empfangen. Die Sprachgeneratoren setzen die Phoneme in analoge Signale zur Verstärkung und Wandlung in Schall durch Verstärker 34 und Lautsprecher 36 um.

Der Vorteil des in Fig.2 gezeigten Systems ist, daß ein einziger großer und komfortabler Sprach-Umsetzer benutzt werden
kann, um die Phoneme für eine Anzahl von Sprachgeneratoren
zu erzeugen. Diese Anordnung reduziert in beträchtlicher
Weise die Kosten des Systems verglichen mit Systemen der Art,
wie sie in Fig.1 gezeigt sind, in denen jedem Sprachgenerator ein eigener Sprach-Übersetzer zugeordnet ist. Außerdem
kann die Qualität der Sprache, die durch die Lautsprecher
erzeugt wird, durch Modifizieren des einzigen Text-zu-Sprache-
Umsetzalgorithmus in dem Sprach-Übersetzer 26 deutlich ver-

-14-

bessert werden. In einem System des in Fig.1 gezeigten
Typs müßte das Text-zu-Sprache-Umsetzprogramm in jedem der
Vielzahl von Sprach-Übersetzern modifiziert werden.

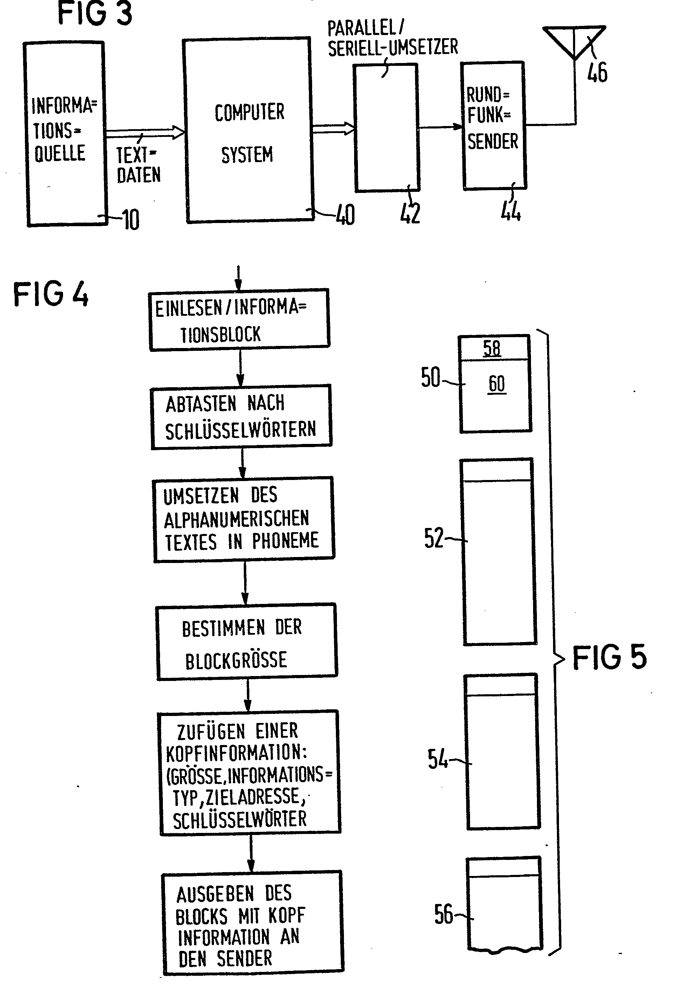

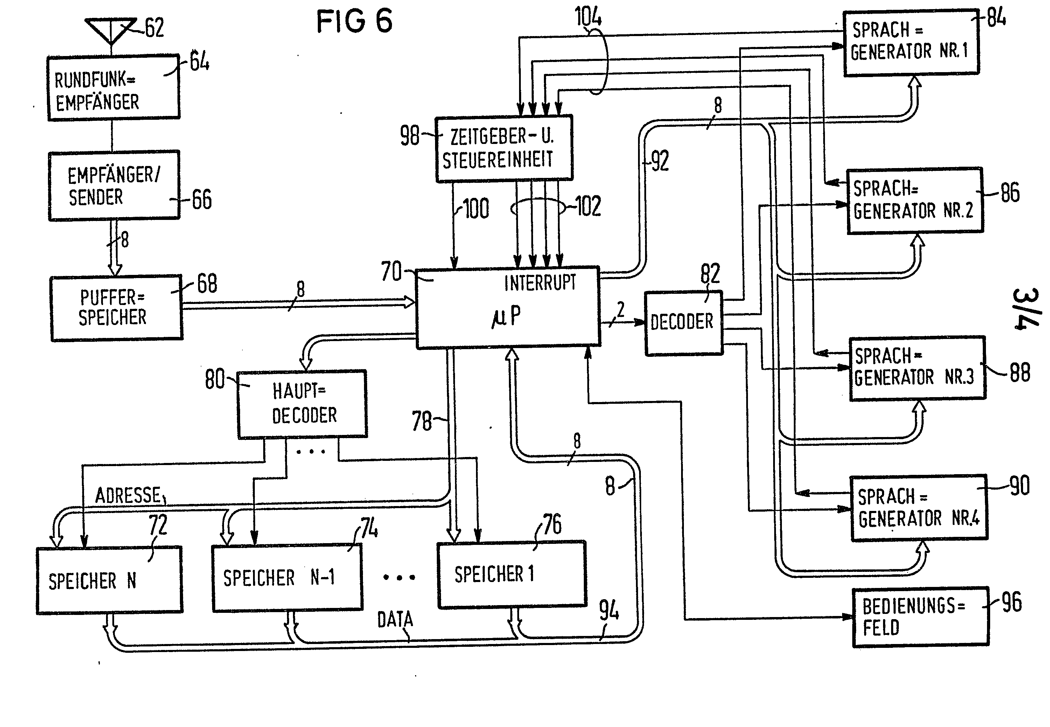

Fig.3 und Fig.6 zeigen ein Informationsbetriebssystem gemäß
der vorliegenden Erfindung, das eine Sendestation (Fig.3)
und eine Empfangsstation (Fig.6) enthält. Die Sendestation
und deren Arbeitsweise werden im folgenden beschrieben.

Die Einrichtung gemäß Fig.3 besteht aus einer Informationsquelle 10, die 8-bit-Bytes für ASCII-codierte alphanumerische Zeichen in einem Textdatenstrom an ein Computersystem
40 abgibt. Das Computersystem führt die Sprach-Übersetzung
aus und fügt jedem Informationsblock eine "Kopfinformation"
zu, und zwar in einer Weise, wie sie weiter unten beschrieben wird. Der Computer gibt dann 8-bit-Bytes für Daten, die
sowohl die betreffenden Phoneme als auch ASCII-Zeichen definieren, an einen Parallel/Seriell-Umsetzer und Pufferspeicher 42 ab. Dieser Parallel/Seriell-Umsetzer und Pufferspeicher 42 gibt einen seriellen Datenstrom an einen Sender
44 aus, der die binärcodierte Information über eine Antenne
46 abstrahlt.

Der Computer 40 arbeitet entsprechend dem Flußdiagramm, das
in Fig.4 gezeigt ist. Er startet durch Einlesen eines Informationsblocks, der aus einem vollständigen Satz von Nachrichten oder einem Artikel bestehen kann, der mehrere Textabsätze oder -seiten enthalten kann. Die Informationsquelle
10 kann beispielsweise ein Nachrichtendienst, z.B. UPI oder
AP, sein. In jedem Fall ist jedem Satz von Nachrichten oder
jedem Artikel zumindest ein Code oder Text vorangestellt
oder diesem nachgeordnet, der die Art von Nachrichten kennzeichnet, auf die er sich bezieht. Beispielsweise kann der
Satz von Nachrichten aus Internationalen Nachrichten, Lokalnachrichten, Geschäftsnachrichten, Sportmeldungen, Wetterberichten usw. bestehen.

Danach kann der Computer 40 den Textblock nach bestimmten Schlüsselwörtern abtasten, die später beim Wiederaufrufen dieser Nachrichten hilfreich sein können. Wenn beispielsweise die Nachrichten aus "Sportnachrichten" bestehen, kann der Computer den Text nach Wörtern wie "Fußball", "Baseball", "Hockey" usw. absuchen. Diese Schlüsselwörter können zu einem späteren Zeitpunkt benutzt werden, um die Artikel, die sich speziell auf Fußball, Baseball oder Hockey beziehen, auszuwählen. Danach führt der Computer die Text-zu-Sprache-Umsetzung aus, d.h. er setzt die Wörter in dem Datenblock in Phoneme um. Dies kann mittels eines hochentwickelten Text/Sprache-Umsetzungsalgorithmus geschehen.

Der nächste Schritt besteht darin, die Größe des umgesetzten Blocks zu bestimmen. Dies sollte nur geschehen, nachdem der Block von ASCII-Zeichen in Phoneme umgesetzt worden ist.

Schließlich fügt der Computer dem Block aus Phonemen eine Kopfinformation in einem herkömmlichen, nämlich beispielsweise dem ACSII-Format zu. Diese Kopfinformation kann die Größe des Blocks, die Art der Nachrichten, die Schlüsselwörter (falls vorhanden) und die Adresse irgendeines (oder aller) Empfänger (s), zu dem oder zu denen der Block zu übertragen ist, enthalten. Der sich ergebende Block besteht aus der Kopfinformation und den Phonemen. Er wird dann zu dem Sender 44 über den Parallel/Seriell-Umsetzer und Pufferspeicher übertragen.

Fig.5 zeigt, wie der Datenstrom, der durch den Computer 40 zu dem Parallel/-Seriell-Umsetzer und Pufferspeicher ausgegeben wird, beschaffen sein kann. Die Daten werden in
aufeinanderfolgenden Blöcken 50, 52, 54, 56 ... unterschiedlicher Länge übertragen. Jeder Block enthält eine
Kopfinformation 58 im ASCIII-Zeichenformat und einen
Hauptblock 60, der aus Phonemen, die in einer bestimmten
Folge angeordnet sind, besteht.

Fig.6 zeigt die Empfangsstation, die mit der Sendestation,
welche in Fig.3 gezeigt ist, zusammenarbeitet. Das von der
Sendestation gesendete Signal wird über eine Antenne 62 empfangen und in einen seriellen Datenstrom durch einen Empfänger 64 rückumgesetzt. Dieser Datenstrom wird einem universellen asynchronen Empfänger/Sender (UART) 66 zugeführt, der
die seriellen Daten in 8-bit-Paralleldaten (8-bit-Bytes für
ASCIII-codierte alphanumerische Zeichen) umsetzt. Die Zeichen-Bytes werden einem 64 x 8 FIFO(first in/first out)-
Pufferspeicher 68 zugeführt, der diese Bytes an seinen Ausgangsklemmen zur Abnahme durch einen Mikroprozessor 70 hält.
 Der Mikroprozessor 70 ruft die Daten auf und speichert sie
in einem verfügbaren Bereich in einem großen Speicher mit
wahlfreiem Zugriff RAM. Dieses RAM kann beispielsweise aus
einer Anzahl N von Speicher-Chips 72, 74 und 76 bestehen.
Diese Chips empfangen eine Adresse von dem Mikroprozessor
über einen Adreß-Bus 78 und werden durch ein Signal aus
einem Hauptdecoder 80 bereitgeschaltet. Der Hauptdecoder
setzt einen Bit-Code, der von einem Eingabe/Ausgabe-Port des
Mikroprozessors empfangen wird, in ein Signal auf einer seiner N Ausgangsleitungen um, um dadurch das gewünschte Speicher-Chip auszuwählen.

Ein vergleichbarer Decoder 82 ist vorgesehen, um einen aus
vier verfügbaren Sprachgeneratoren 84, 86, 88 und 90 auszuwählen. Diese Sprachgeneratoren werden durch ein Signal
aus dem Decoder 82 bereitgeschaltet und empfangen 8-bit-Phonem-Codes über einen Datenbus 92. Diese Phonem-
Codes werden aus dem Computerspeicher über einen Speicher-
Datenbus 94 abgerufen.

Ein Bedienungsfeld 96, das eine kleine Tastatur und bei Bedarf einige LED-Indikatoren enthält, ist mit einem weiteren
Eingabe/Ausgabe-Port des Mikroprozessors 70 verbunden, um
eine Auswahl von gewünschten Nachrichten durch den Bediener
für einen bestimmten Sprachgenerator zu ermöglichen. Beispielsweise kann das Bedienungsfeld fünf "Informationsart"-
Tasten, jeweils eine für Internationale Nachrichten, Lokale
Nachrichten, Geschäftsnachrichten, Sportmeldungen und Wetterberichte, und vier Sprachgenerator-Tasten, nämlich eine für
jeden der Sprachgeneratoren, enthalten. Zusätzlich oder anstelle davon kann das Bedienungsfeld eine kleine Tastatur
zum Eingeben des Empfangsstation-Adreßcodes und irgendwelcher weiterer Information, die von dem Mikroprozessor benötigt wird, enthalten.

Der Betreiber der Rundfunkstation kann eine bessere Kontrolle ausüben, wenn der Informationstyp und/oder die Adreßinformation mittels eines Einsteckmoduls eingegeben wird.
Dieser Modul kann auf diese Weise sicherstellen, daß die
empfangende Station nur dann arbeitet, wenn der Rundfunkteilnehmer seine Gebühr bezahlt hat. Der Einsteckmodul kann
sogar derart programmiert sein, daß er nur bis zu einem bestimmten Datum wirksam ist, um so den Teilnehmer zu "zwingen", die Teilnehmergebühr pünktlich zu zahlen.

Schließlich empfängt der Mikroprozessor 70 Taktsignale aus
einer Zeitgeber- und Steuereinheit 98. Diese Einheit gibt
das übliche hochfrequente Takteingangssignal auf einer Leitung 100 ab und erzeugt hier Interrupt-Eingangssignale auf
Leitungen 102. Die Signale auf einer Leitung 102 unterbrechen den Arbeitszyklus des Mikroprozessors und veranlassen,
daß dieser Phonemcodes an einen betreffenden der Sprachgeneratoren ausgibt. Die Zeitgeber- und Steuereinheit 98
empfängt sog. "handshake"-Signale von jedem der Sprachgeneratoren und ist auf diese Weise darüber informiert, wann ein
bestimmter Sprachgenerator bereit ist, den jeweils nächsten
Phonemcode zu empfangen. Wenn dieser Umstand eintritt, wird
ein Interrupt-Signal an den Mikroprozessor 70 auf einer der
Leitungen 102 ausgegeben, und der Mikroprozessor adressiert
das RAM und empfängt den nächsten Phonemcode für den betreffenden Sprachgenerator. Der Mikroprozessor gibt diesen Phonemcode auf den Datenbus 92 aus und adressiert den Decoder
82, der seinerseits den bestimmten Sprachgenerator bereitschaltet, damit dieser den Phonemcode empfangen kann.

Da die Sprachgeneratoren im Mittel nur jeweils angenähert
zwanzig Phonemcodes pro Sekunde empfangen, überträgt der
Mikroprozessor 70 einen Phonemcode zu einem der Sprachgeneratoren ungefähr alle 12.5 ms (1000/20x4). Wenn angenommen
wird, daß etwa 50 μs benötigt werden, um einen 1-Byte-Code
zu einem Sprachgenerator zu übertragen, benötigt der Mikroprozessor nur ungefähr 0.4% seiner Zeit zum Ausgeben von
Bytes für die vier Sprachgeneratoren. Der Rest der ihm zur
Verfügung stehenden Zeit wird für andere Informationsverarbeitungs-Aufgaben verbraucht.

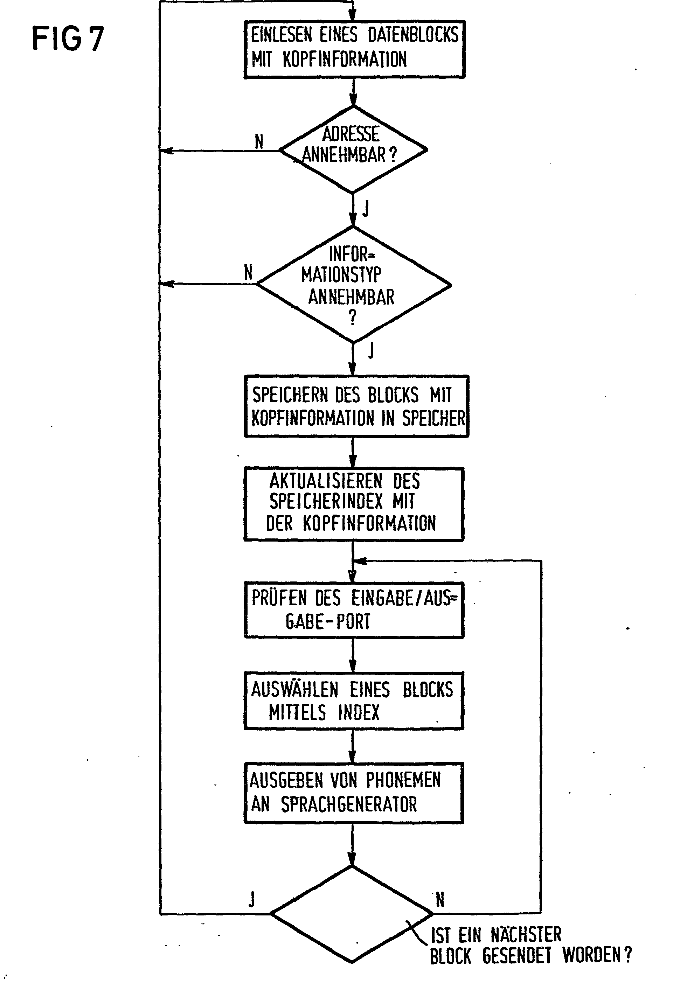

Fig.7 zeigt den Hauptinformations-Verarbeitungsablauf, der
durch den Mikroprozessor 70 durchgeführt wird. Wie ersichtlich ist, liest der Mikroprozessor einen vollständigen Datenblock zusammen mit dessen Kopfinformation ein, z.B. den Block
50, der in Fig.5 dargestellt ist.

Zu Beginn prüft der Mikroprozessor die Kopfinformation, um
festzustellen, ob sowohl die Adresse als auch der Typ von

-19

Information für die empfangende Station annehmbar sind.
Wenn dies der Fall ist, wird der Datenblock im Speicher
entweder mit oder ohne Kopfinformation gespeichert. Die
Kopfinformation wird dann dazu benutzt, einen Speicherindex, der eine Auskunft über den Speicherort aller Informationsblöcke, die in dem Speicher abgelegt sind, aufrechterhält, auf den jeweils neuesten Stand zu bringen, und es
wird jedem Block die betreffende Kopfinformation zugeordnet.

Beispielsweise enthält der Speicherindex eine Information
darüber, daß ein Satz internationaler Nachrichten einer bestimmten Länge mit bestimmten Schlüsselwörtern in dem Speicher - beginnend an einem bestimmten Speicherplatz - abgelegt ist.

Wenn die Kopfinformation nicht mit dem zuvor gespeicherten
Adreßcode der empfangenden Station zusammenpaßt oder wenn
der Informationstyp nicht mit denjenigen Informationstypen
korrespondiert, die bei der empfangenden Station für den
Teilnehmer von Interesse sind, wird der betreffende Datenblock nicht zur Speicherung in den Speicher angenommen.

Der Mikroprozessor prüft periodisch den Eingabe/Ausgabe-
Port, der mit dem Bedienungsfeld 96 verbunden ist, um jedwede Änderung der Auswahl des Informationstyps und des
Sprachgenerators er zu überwachen. Die Information betreffend die Auswahlen, die an dem Bedienungsfeld vorgenommen
werden, wird in einem Speicherplatz aufbewahrt, um den
Mikroprozessor zu steuern, bis diese Auswahlen geändert werden. Die jeweils geltende Auswahl für einen bestimmten
Sprachgenerator wird dazu benutzt, einen bestimmten Nachrichtensatz für diesen Sprachgenerator auszuwählen.

0158270

-20-

Schließlich bringt, wie zuvor erläutert, der Mikroprozessor fortlaufend die Sprachgeneratoren betreffend die Phonemcodes jeweils auf den neuesten Stand, wie dies erforderlich ist.

Es wurde ein neuartiges Rundfunksystem gezeigt und beschrieben, das alle Aufgaben erfüllt, die zuvor angegeben wurden, und das die angestrebten Vorteile aufweist. Der Fachmann kann zahlreiche Änderungen, Modifikationen, Variationen und dergl. durchführen, ohne daß dazu der allgemeine Erfindungsgedanke und der Schutzumfang, wie er durch die Ansprüche bestimmt ist, verlassen werden müßten.

Patentansprüche:

1. Einrichtung zum Übertragen von Information zu einem fernen Ort,

g e k e n n z e i c h n e t  durch

a) eine Informationsquelle (10), die an einem ersten Ort angeordnet ist, zum Erzeugen eines Textdatenstromes, der aus einer Vielzahl von Wörtern besteht;

b) einen Sprach-Übersetzer (26), der an dem ersten Ort angeordnet sind und mit der Informationsquelle (10) zum Übersetzen der Vielzahl von Wörtern in Wort-Phoneme verbunden ist;

c) einen Übertragungskanal (30), der mit dem Sprach-Übersetzer (26) verbunden ist, zum Übertragen der Phoneme zu dem fernen zweiten Ort;

d) zumindest einen Sprachgenerator (28), der an dem zweiten Ort angeordnet und mittelbar mit dem Übertragungskanal (30) verbunden ist, zum Umsetzen der Phoneme, die über den Übertragungskanal (30) empfangen werden, in analoge Sprachsignale;

e) zumindest einen Signalwandler (36), der mittelbar mit dem Sprachgenerator (28) verbunden ist, zum Wandeln der analogen Sprachsignale in Sprachschall.

2. Einrichtung nach Anspruch 1, dadurch g e k e n n - z e i c h n e t , daß zumindest ein Pufferspeicher (32), der an dem zweiten Ort angeordnet und zwischen den Übertragungskanal (30) und den Sprachgenerator (28) geschaltet ist, zum Einstellen der Rate, bei welcher die Phoneme dem Sprachgenerator (28) zugeführt werden, vorgesehen ist.

3. Einrichtung nach Anspruch 1, dadurch g e k e n n - z e i c h n e t , daß eine Vielzahl von Sprachgeneratoren (28) an dem zweiten Ort vorgesehen und mit dem Übertragungskanal (30) zum Umsetzen der Phoneme, die über diesen Übertragungskanal (30) empfangen wurden, in entsprechende Sprachsignale verbunden sind.

4. Einrichtung nach Anspruch 3, dadurch g e k e n n - z e i c h n e t , daß eine Vielzahl von Signalwandlern (36) vorgesehen sind, die jeweils mit einem der Sprachgeneratoren (32) verbunden sind.

5. Einrichtung nach Anspruch 3, dadurch g e k e n n - z e i c h n e t , daß eine Vielzahl von Pufferspeichern (32) vorgesehen sind, die jeweils an dem zweiten Ort angeordnet und zwischen den Übertragungskanal (30) und einen der Sprachgeneratoren (28) zum Einstellen der Rate, bei der den jeweils betreffenden Sprachgeneratoren (28) Phoneme zugeführt werden, geschaltet sind.

6. Einrichtung nach Anspruch 3, dadurch g e k e n n - z e i c h n e t , daß der Übertragungskanal (30) ein Rund- funk-Übertragungskanal ist.

7. Einrichtung nach Anspruch 1, dadurch g e k e n n - z e i c h n e t , daß der Sprach-Übersetzer (26) einen ersten Computer zum Übersetzen der Vielzahl von Wörtern in Phoneme enthält.

8. Einrichtung nach Anspruch 1, dadurch g e k e n n - z e i c h n e t , daß ein zweiter Computer, vorzugsweise ein Mikroprozessor (70), vorgesehen ist, der an dem zweiten Ort angeordnet und zwischen den Übertragungskanal und den Sprachgenerator zum Einstellen der Rate, bei welcher dem betreffenden Sprachgenerator Phoneme zugeführt werden,
geschaltet ist.


9. Einrichtung nach Anspruch 8, dadurch g e k e n n -
z e i c h n e t , daß die Informationsquelle (10) aufeinanderfolgende Blöcke (50, 52, 54, 56 ...) von Textdaten erzeugt,
wobei jeder Block von Textdaten aus einer Vielzahl von Wörtern besteht, die in Sätzen angeordnet sind und sich auf einen
bestimmten Gegenstand beziehen, und wobei die Einrichtung des
weiteren folgende Elemente enthält:


f) einen ersten Computer (40), der am ersten Ort angeordnet
   und mit der Informationsquelle (10) verbunden ist, zum
   Erzeugen einer Kopfinformation (58), die jedem der Blöcke
   blöcke (50, 52, 54, 56 ...) jeweils zugeordnet wird, wobei
   die Kopfinformation (58) den Gegenstand des ihr zugeordneten Datenblocks definiert und wobei diese über den Übertragungskanal (30) zusammen mit den Phonemen der Wörter dieses
   Blocks übertragen wird;


g) einen zweiten Computer (70), der an dem zweiten Ort angeordnet und mit dem Übertragungskanal verbunden ist, zum
   Auswählen von Wortblöcken zu deren Wiedergabe mittels der
   Elemente (d) und (e) in Anspruch 1 in Übereinstimmung mit
   einem zuvor ausgewählten Gegenstand, wobei der zweite Computer (70) wirksam ist, um den vorausgewählten Gegenstand
   mit den Gegenständen zu vergleichen, die durch die Kopfinformation (58) definiert sind.


10. Einrichtung nach Anspruch 9, dadurch g e k e n n -
z e i c h n e t , daß der zweite Computer (70) ein Bedienungsfeld (96) zum manuellen Eingeben des vorausgewählten Gegenstandes aufweist und daß der zweite Computer (70) wirksam
ist, um empfangene Textdatenblöcke zu speichern und um ausgewählte Datenblöcke aus dem Speicher in Übereinstimmung mit dem vorausgewählten Gegenstand aufzusuchen und wiederzugeben.

11. Einrichtung nach Anspruch 1, dadurch g e k e n n -
z e i c h n e t , daß eine Vielzahl von fernen, zweiten
Orten vorgesehen ist, die jeweils zumindest einen Sprachgenerator (28) und zumindest einen Signalwandler (36) aufweisen,
wobei der Übertragungskanal (30) die Phoneme zu allen der
zweiten Orte überträgt und wobei die Informationsquelle (10)
aufeinanderfolgende Textdatenblöcke erzeugt, wobei jeder
Textdatenblock aus einer Vielzahl von Textwörtern, die für
einen oder mehrere der entfernte Orte bestimmt sind, besteht
und wobei die Einrichtung folgende Elemente enthält:

f) einen ersten Computer (40), der an dem ersten Ort angeordnet und mit der Informationsquelle (10) verbunden ist,
   zum Erzeugen einer Kopfinformation (58), die jeweils jedem
   der Datenblöcke (50, 52, 54, 56 ...) zugeordnet ist, wobei
   die Kopfinformation (58) Adressen der fernen zweiten Orte
   definiert, an denen die Wörter in den zugeordneten Datenblöcken wiedergegeben werden sollen;

g) einen zweiten Computer (70), der an jedem der zweiten
   Orte angeordnet und mit dem Übertragungskanal verbunden
   ist, zum Auswählen von Wortblöcken zu deren Wiedergabe mit
   Hilfe der Elemente (d) und (e) in Anspruch 1 in Übereinstimmung mit einer vorausgewählten Ortsadresse, wobei der
   zweite Computer (70) wirksam ist, um die vorausgewählte
   Adresse mit den Ortsadressen zu vergleichen, die durch die
   jeweilige Kopfinformation definiert ist.

12. Einrichtung nach Anspruch 11, dadurch g e k e n n -
z e i c h n e t , daß der zweite Computer (70) in sich eine
einzige vorausgewählte Ortsadresse gespeichert hat und daß
der zweite Computer (70) wirksam ist, um einen empfangenen Textdatenblock zur ggf. wiederholten Wiedergabe nur dann zu speichern, wenn die Ortsadresse, die in der Kopfinformation (58) für den betreffenden Textdatenblock definiert ist, mit der vorausgewählten Ortsadresse identisch ist.

0158270

1/4

FIG 1

INFORMATIONS=
QUELLE

TEXTDATENSTROM (ASC II)

ÜBERTRAGUNGSKANAL

12

PHONEME

SPRACH-
ÜBER=
SETZER
UND
-PUFFER

14

SPRACH=
GENE=
RATOR

16

18

20

22

VERSTÄRKER

LAUT
SPRECHER

24

10

STAND DER TECHNIK

FIG 2

PUFFER=
SPEICHER

32

SPRACH=
GENE
RATOR

28

34

36

INFOR=
MATIONS=
QUELLE

10

SPRACH-
ÜBER=
SETZER

TEXTDATEN

26

PHONEME

30

PUFFER=
SPEICHER

32

SPRACH=
GENE=
RATOR

28

34

36

PUFFER=
SPEICHER

32

SPRACH=
GENE=
RATOR

28

34

36

FIG 3

| INFORMA= TIONS= QUELLE | | COMPUTER SYSTEM | | PARALLEL/ SERIELL-UMSETZER | | RUND= FUNK= SENDER |

INFORMA=
TIONS=
QUELLE

TEXT=
DATEN

COMPUTER
SYSTEM

PARALLEL/
SERIELL-UMSETZER

RUND=
FUNK=
SENDER

46

10

40

42

44

FIG 4

EINLESEN / INFORMA=
TIONSBLOCK

ABTASTEN NACH
SCHLÜSSELWÖRTERN

UMSETZEN DES
ALPHANUMERISCHEN
TEXTES IN PHONEME

BESTIMMEN DER
BLOCKGRÖSSE

ZUFÜGEN EINER
KOPFINFORMATION:
(GRÖSSE,INFORMATIONS=
TYP,ZIELADRESSE,
SCHLÜSSELWÖRTER

AUSGEBEN DES
BLOCKS MIT KOPF
INFORMATION AN
DEN SENDER

58

60

50

52

54

56

FIG 5

FIG 6

3/4

0158270

0158270

FIG 7

```
┌─────────────────────────┐
│ EINLESEN EINES DATENBLOCKS │
│ MIT KOPFINFORMATION       │
└─────────────────────────┘
            │
            ▼
         ╱╲
    N   ╱    ╲
◄──────  ADRESSE
       ╲ ANNEHMBAR? ╱
         ╲    ╱
            │ J
            ▼
         ╱╲
    N   ╱    ╲
◄──────  INFOR=
       ╲ MATIONSTYP
         ANNEHMBAR
            ?  ╱
            │ J
            ▼
┌─────────────────────────┐
│ SPEICHERN DES BLOCKS MIT │
│ KOPFINFORMATION IN SPEICHER │
└─────────────────────────┘
            │
            ▼
┌─────────────────────────┐
│ AKTUALISIEREN DES         │
│ SPEICHERINDEX MIT         │
│ DER KOPFINFORMATION       │
└─────────────────────────┘
            │
            ▼
┌─────────────────────────┐
│ PRÜFEN DES EINGABE/AUS=   │
│ GABE-PORT                 │
└─────────────────────────┘
            │
            ▼
┌─────────────────────────┐
│ AUSWÄHLEN EINES BLOCKS    │
│ MITTELS INDEX             │
└─────────────────────────┘
            │
            ▼
┌─────────────────────────┐
│ AUSGEBEN VON PHONEMEN     │
│ AN SPRACHGENERATOR        │
└─────────────────────────┘
            │
            ▼
         ╱╲
   J    ╱    ╲   N
◄──────         ──────►
       ╲        ╱
         ╲    ╱
```

IST EIN NÄCHSTER
BLOCK GESENDET WORDEN?